# EUROPEAN PATENT APPLICATION

(11) **EP 2 360 577 A1**
(43) Date of publication of application: **24.08.2011**
(21) Application number: 10196885.7
(22) Date of filing: 23.12.2010
(51) Int. Cl.: G06F 9/44

(54) **E-book device and method for providing information on multi-tasking history**

(30) Priority: 29.01.2010 KR 20100008797
(71) Applicant: Samsung Electronics Co., Ltd., Suwon-si, Gyeonggi-do 442-742 (KR)
(72) Inventor: Kim, Pyoung-yun, Gyeonggi-do (KR); Yang, Gyung-hye, Seoul (KR); Yoon, Soo-yeoun, Seoul (KR); Kim Do-yeon, Gyeonggi-do (KR); Jo, Sun-haeng, Gyeonggi-do (KR)
(74) Representative: Clark, David James

(57) **Abstract**

An electronic book (E-book) device generates and provides a multi-tasking history regarding contents displayed on the E-book device.

## Description

### BACKGROUND

### 1. Field

Methods and apparatuses consistent with exemplary embodiments relate to an E-book device, and more particularly, to an E-book device that reproduces and displays an electronic book.

### 2. Description of the Related Art

A related art electronic book ("E-book") device offers various functions in addition to its original function of reproducing an electronic book. One of the most important functions of an E-book device is to support multi-tasking, so that the user may perform several jobs at the same time.

For instance, the user may want to look up a word in an electronic dictionary while reading an E-book on the E-book device when he or she encounters with an unfamiliar word. In this case, multi-tasking functionality should be supported.

If multi-tasking is supported, the user may execute various applications simultaneously, and perform several jobs in relation with each other using the executed applications.

Sometimes, the user may need a result of a previously executed job. For instance, the user looked up a word in a dictionary while reading an E-book on the E-book device. Later, the use may not recall the meaning of the word when reading the E-book again. In this case, the user must query the word in the dictionary every time he or she encounters the word, which is inconvenient.

### SUMMARY

Aspects of the present exemplary embodiments relate to an E-book device that provides history of multi-tasking previously performed in relation to contents that are reproduced by the E-book device, and a method of providing the history of the multi-tasking.

An E-book device, according to an exemplary embodiment may include a storage unit that stores contents, a reproducing unit that reproduces contents stored in the storage unit, a graphical user interface (GUI) generating unit that generates a GUI, the generated GUI including the contents reproduced by the reproducing unit, a display that displays the GUI generated by the GUI generating unit, and a controlling unit that controls the GUI generating unit to include a multi-tasking history regarding contents reproduced by the reproducing unit in the GUI and controls the display to display the GUI including the multi-tasking history.

The contents may be an E-book, and the controlling unit may the GUI generating unit to generate multi-tasking history of a current page of an E-book reproduced by the reproducing unit in the GUI.

The controlling unit, if an executed application is determined to be related to the contents, may record information on the executed application in the multi-tasking history.

The contents may be an electronic book , and an application related to the electronic book may comprise at least one of an electronic dictionary application and a memo pad application.

The controlling unit may record a result of a job performed using an executed application in the multi-tasking history.

The controlling unit, if a job result in the multi-tasking history is selected, may provide selected job result on the display.

The controlling unit may delete a job result selected from multi-tasking history from the multi-tasking history.

A method for providing a multi-tasking history, according to an exemplary embodiment, may include reproducing contents on a display of an electronic book device and providing a multi-tasking history regarding reproduced contents on the display as a graphical user interface (GUI).

The contents may be an electronic book , and the providing may provide the multi-tasking history regarding a current page of the electronic book displayed on the display as the GUI.

The method may further comprise recording information on an executed application in the multi-tasking history if it is determined that the executed application is related to the contents.

The contents may be an electronic book , and an application related to the E-book may comprise at least one of an electronic dictionary application and a memo pad application.

The method may further comprise recording result of a job performed using an executed application in the multi-tasking history.

The method may further comprise providing, if a job result in multi-tasking history is selected, the selected job result on the display.

The method may further comprise deleting a job result, selected from the multi-tasking history, from the multi-tasking history.

As described above, according to an exemplary embodiment, a user may receive multi-tasking history of contents being reproduced. Accordingly, a user does not have to perform a multi-tasking job previously completed again and again.

According to an exemplary embodiment, information on associated jobs that are performed by the user through another closely related application is also linked to be preserved accumulatively, and thus the user may see the associated jobs easily and receive the result of associated jobs directly through the link.

According to the present invention there is provided an apparatus and method as set forth in the appended claims. Other features of the invention will be apparent from the dependent claims, and the description which follows.

### BRIEF DESCRIPTION OF THE DRAWINGS

FIG. 1 is a view illustrating a front side of a dual-screen E-book device according to an exemplary embodiment;
FIG. 2A and FIG. 2B are views provided to explain setting a bookmark;
FIG. 3A and FIG. 3B are views provided to explain the process of extracting the contents of an electronic book;
FIG. 4A and FIG. 4B are views provided to explain a function of tearing out part of an electronic book;
FIG. 5 is view provided to explain a bookshelf-type electronic book list and table-type electronic book list;
FIG. 6 is a view provided to explain the function of recommending an electronic book;
FIG. 7A and FIG. 7B are views provided to explain the function of inserting a photo into a specific page of an electronic book;
FIG. 8A and FIG. 8B are views provided to explain the structure of an electronic paper display (EPD) display screen;
FIG. 9a and FIG. 9B are views provided to explain a change in EPD arrangement;
FIG. 10A and FIG. 10B are views provided to explain the function of highlighting part of an electronic book;
FIG. 11 is a view provided to explain a translation function;
FIG. 12 is a view provided to explain a note sharing function;
FIG. 13 is a view provided to explain an image inserting function;
FIG. 14 is a view provided to explain a memo inserting function;
FIG. 15 is a view provided to explain a wrong answer note of an E-book device;
FIG. 16 is a view provided to explain a scheduler of an E-book device;
FIG. 17 is a view provided to explain information on reading history;
FIG. 18A and FIG. 18B are views provided to explain a class time table of an E-book device;
FIG. 19 is a view provided to explain a multi-taking history;
FIG. 20 is a view provided to explain a note taking function;
FIG. 21A and FIG. 21B are views provided to explain expanding an image viewer;
FIG. 22 is a view illustrating icons to be selected to make a command to move focus on upper part of EPD;
FIG. 23 is a view illustrating a stand-by screen provided on EPD;
FIG. 24 is a view illustrating an E-book device in which a drawer is displayed on EPD;
FIG. 25 is a view illustrating an asymmetric dual-screen E-book device;
FIG. 26 and FIG. 27 are views illustrating examples of utilizing an E-book;
FIG. 28 is a block diagram of a dual-screen E-book device;
FIG. 29 is a flow chart provided to explain the process of generating multi-tasking history;
FIG. 30 is a flow chart provided to explain the process of providing multi-tasking history; and
Fig. 31 is a view illustrating a front side of an E-book device according to an exemplary embodiment.

### DETAILED DESCRIPTION OF THE EXEMPLARY EMBODIMENTS

Reference will now be made in detail to the exemplary embodiments, which are illustrated in the accompanying drawings, wherein like reference numerals refer to like elements throughout. The exemplary embodiments are described below, in order to explain the present inventive concept by referring to the drawings.

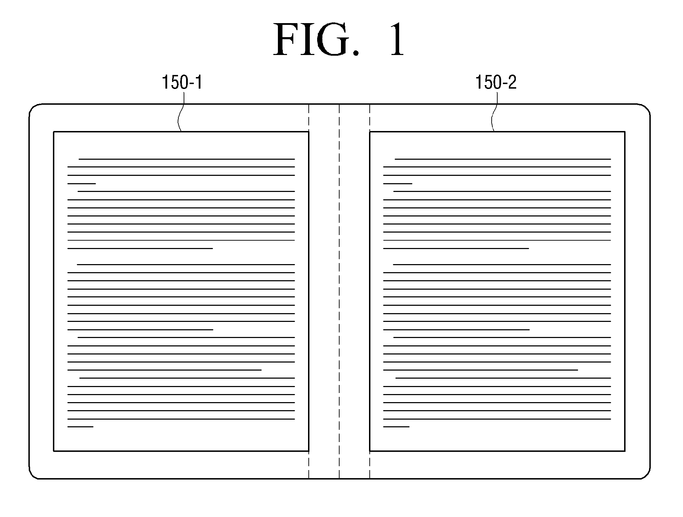

FIG. 1 is a view illustrating a front side of a dual-screen E-book device according to an exemplary embodiment. As illustrated in FIG. 1, the dual-screen E-book device comprises two electronic paper displays (EPDs) 150-1, 150-2.

Consecutive pages of E-book are displayed on EPDs 150-1, 150-2. That is, page 'n' is displayed in EPD-1 (150-1) and page 'n+1' is displayed in EPD-2 (150-2). In other words, the electronic book is displayed to a reader on the dual-screen E-book device in much the same way as a reader would read a traditional paper book.

A touch panel (not shown) is disposed in part of the EPDs 150-1, 150-2. Accordingly, the touch panel may sense a user's input on the surface of the EPDs 150-1, 150-2.

The functions provided by an E-book device will be described in detail below.

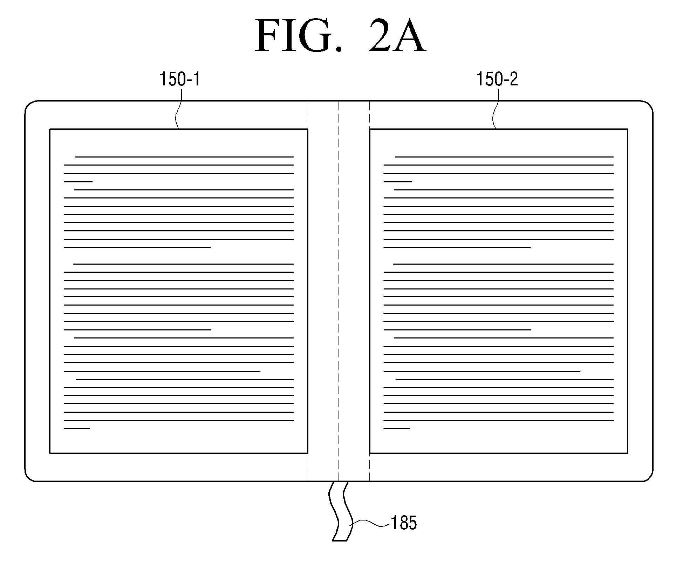

FIG. 2A illustrates a dual-screen E-book device having a bookmark string 185 function that is used to set a bookmark. If a user pulls the bookmark string 185 by making an input on the EPD 150-1, 150-2, the dual-screen E-book device sets a bookmark on a currently-displayed page of the EPD 150-1, 150-2.

In the case of a traditional paper book, only one page can be saved using a bookmark. However, with an E-book device, there is no limit in the number of bookmarks that can be set according to this exemplary embodiment. In addition, the bookmarks set in an E-book device may also be save pages in a plurality of electronic books. That is, it is possible to set bookmarks on pages 101-102 of electronic book A, pages 151-152 of electronic book B, and pages 201-202 of electronic book C.

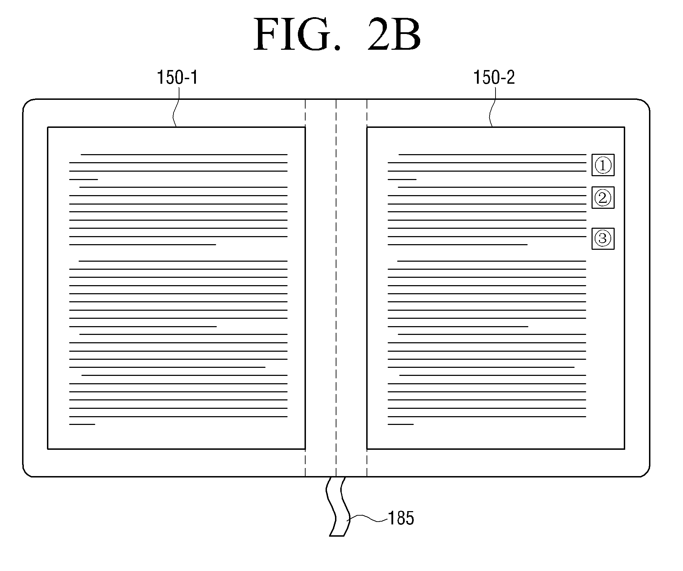

As illustrated in FIG. 2B, a user may set bookmarks that are arranged on the right side of EPD-2 (150-2). In FIG. 2B, the numbers indicate various bookmarks, but this is only an example and the bookmarks may be displayed in various forms. The pages of the electronic books, on which the bookmarks are set, may be displayed in the bookmarks.

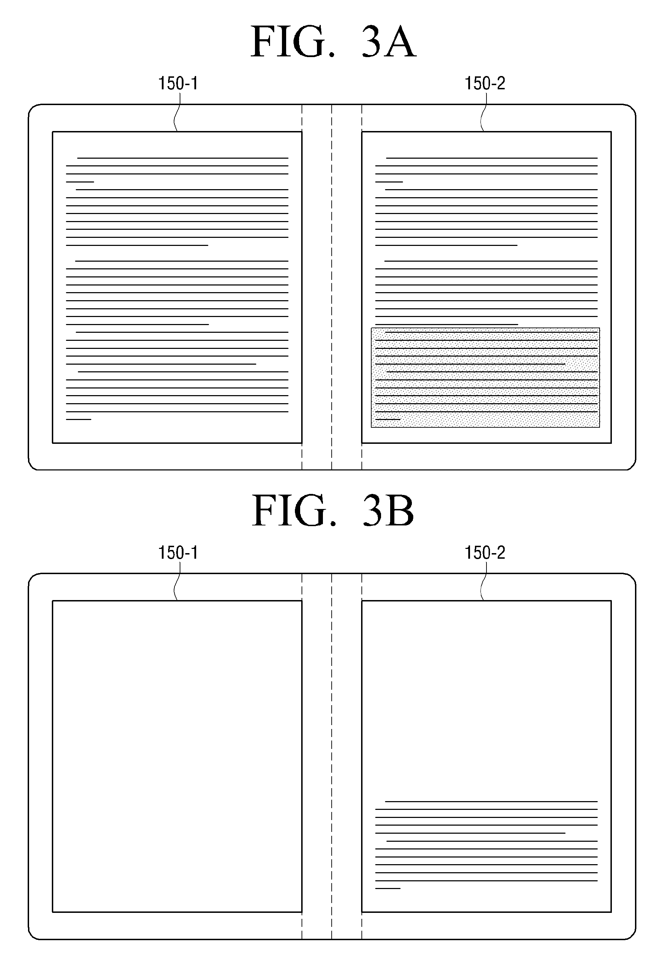

It is possible to extract part of an E-book contents displayed EPD 150-1, 150-2 of an E-book device. As illustrated in FIG. 3A, if a user selects part of E-book contents using an input device, for example by the user's finger or with a touch-pen, the selected contents may be extracted, as illustrated in FIG. 3B.

The extracted part of E-book may be preserved in a drawer portion of the E-book device, which will be explained below. That is, the E-book device may store part of E-book. In this case, the E-book device may store part of E-book in a text file or in an image file.

The contents reproduced through an E-book device are not limited to an electronic book.

Not only an E-book, such as a novel or comic book, but also other contents, such as a memo pad or a diary, may be reproduced through an E-book device. Unlike an E-book, there are parts of contents in a memo pad or a diary that a user may wish to be confidential.

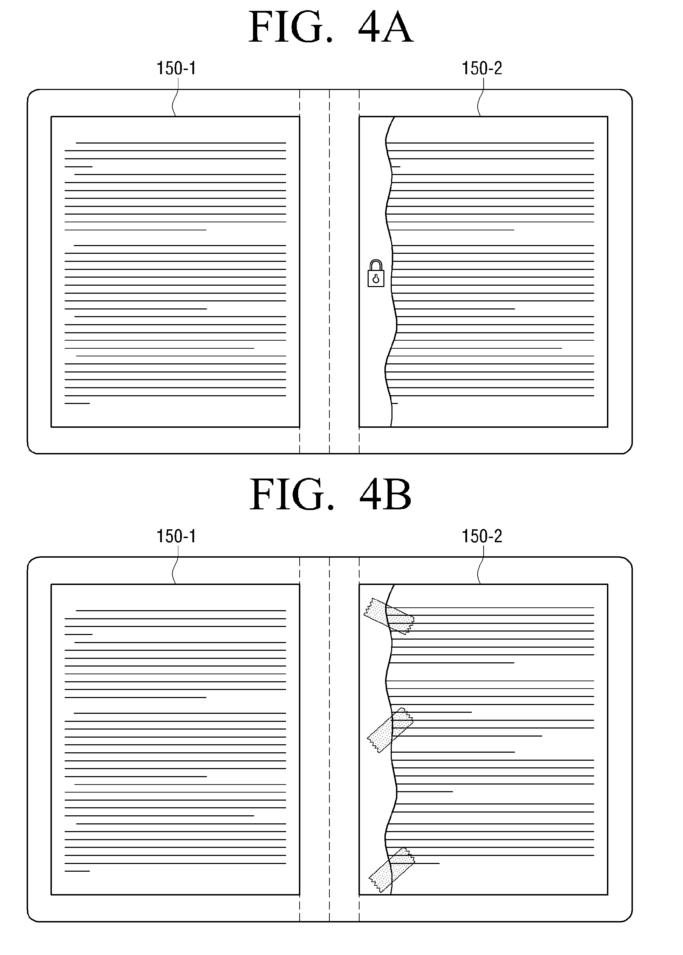

For this, the E-book device, according to an exemplary embodiment, provides the function of tearing out part of a currently-displayed E-book or other display contents, thereby obscuring a portion of the displayed contents from a user's view. That is, if a user sets part of E-book to be obscured, the obscured part is displayed as being omitted from the E-book. The obscured part may be preserved in a drawer of the E-book device, as illustrated in FIG. 4A. The lock in EPD-2 (150-2) of FIG. 4A is an icon that indicates the obscured part is confidentially secured, and preserved in a drawer of the E-book device. The obscured portion of the content displayed on the E-book device may be displayed as though a page of a conventional paper book is torn out, as illustrated in FIG. 4A.

In the case of contents other than a memo pad or a diary, part of the displayed contents may be torn out and preserved in a drawer. In a paper book, when tearing out a physical page, the other side of the printed page is also torn out, but in the E-book device according to an exemplary embodiment, the other side of the printed page may not be torn out. That is, a front side of a page may be obscured, while a back side of the obscured page may remain displayed in the E-book device.

As illustrated in FIG. 4B, the obscured part of an E-book may be restored back to its original position by a user's manipulation. The restored portion of the E-book may be displayed as cellophane tapes on EPD-2 (150-2) of FIG. 4B as icons that indicate a previously obscured, torn-out part, preserved in the drawer, has been restored as unsecured.

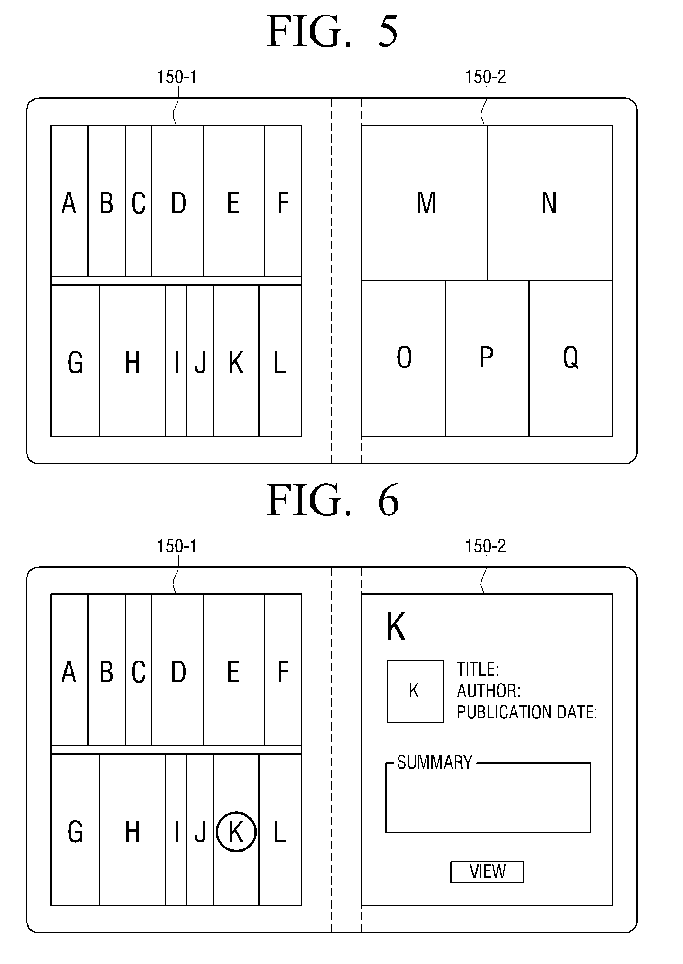

FIG. 5 illustrates a bookshelf displayed on EPD-1 (150-1). The E-books displayed as letters A to L on the bookshelf indicate a list of E-books stored in a memory of the dual-screen E-book device.

In addition, FIG. 5 illustrates that E-books M to Q are on a table on EPD-2 (150-2) and the E-books on the table indicate E-books that are currently being reproduced by the dual-screen E-book device.

If a user selects an E-book A to L from the bookshelf, the selected book disappears from the bookshelf and is put on the table. Also, if the user stops reproducing an E-book from among the E-books on the table, the book disappears from the table and is put onto the bookshelf.

If the user selects an E-book from among the E-books on the table, the selected E-book is displayed in full screen on EPD 150-1, 150-2.

According to an exemplary embodiment, the E-book device has the function of automatically recommending an E-book to a user. E-books may be recommended randomly, or based on the user's preference or genre. Alternatively, recommendation may be made by online or offline bookstores based on bestseller lists.

In FIG. 6, detailed information on the recommended electronic book, from among the E-books in the bookshelf displayed on EPD-1 (150-1), is displayed on EPD-2 (150-2). If a user inputs a command to reproduce the recommended electronic book, the E-book is reproduced on the EPD 150-1, 150-2.

According to an exemplary embodiment, the E-book device provides a function of inserting a photo into a specific page of the E-book. The photo to be inserted and the page into which the photo is inserted are selected by a user.

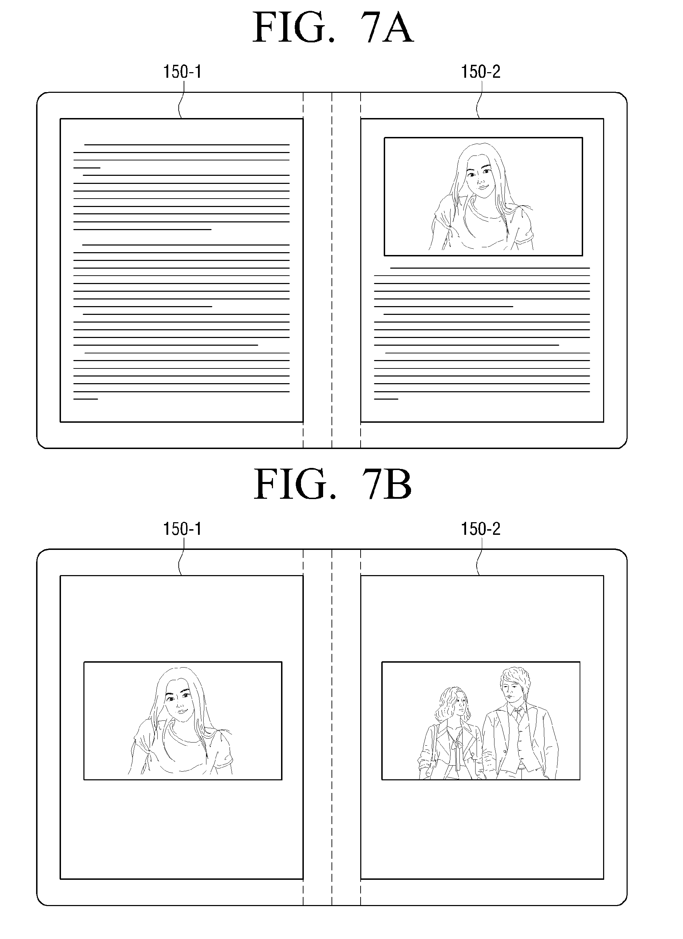

To implement this function, the E-book device links the page of the E-book selected by the user to the photo selected by the user. Accordingly, if the selected page is displayed, the photo linked to the page may be displayed as being overlapped on top of the page in the electronic book or displayed along with the page of the electronic book, as illustrated in FIG. 7A.

If a user touches the photo displayed on the E-book device in FIG. 7A, the E-book device executes an image viewer. Consequently, the photos inserted into the specific page of the electronic book may be consecutively displayed on EPD 150-1, 150-2, as illustrated in FIG. 7B.

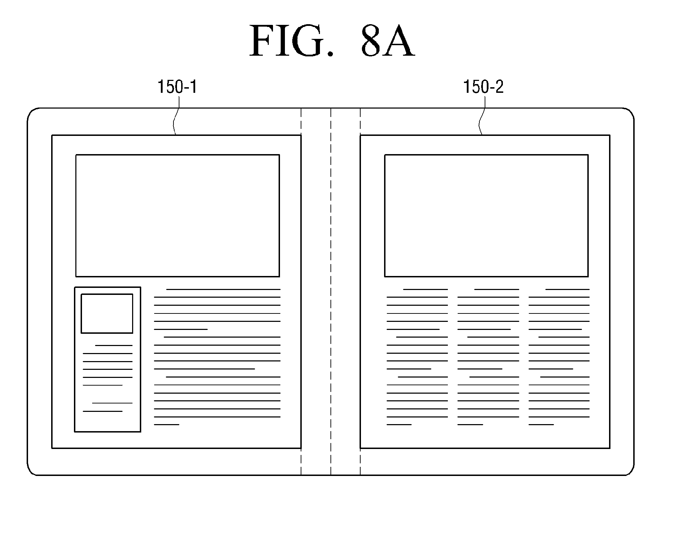

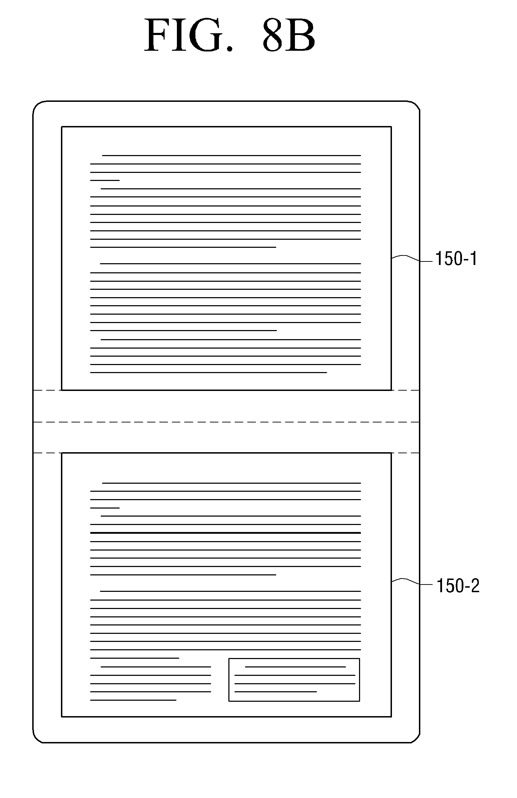

The dual-screen E-book device composes a screen displayed on EPD 150-1, 150-2 according to the shape of the E-book. If the E-book has a horizontal shape, as illustrated in FIG. 8A, the E-book is displayed on EPD 150-1, 150-2 in a landscape view. On the other hand, if the E-book has a vertical shape, as illustrated in FIG. 8B, the E-book is displayed on EPD 150-1, 150-2 in a portrait view.

The display screen in FIG. 8A and FIG. 8B may be changed automatically, depending on the shape of the E-book, or may be changed manually by the user.

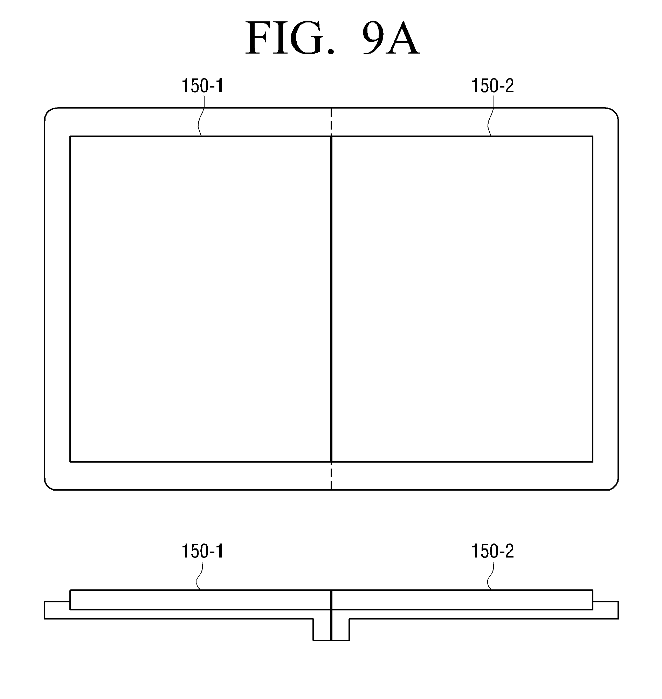

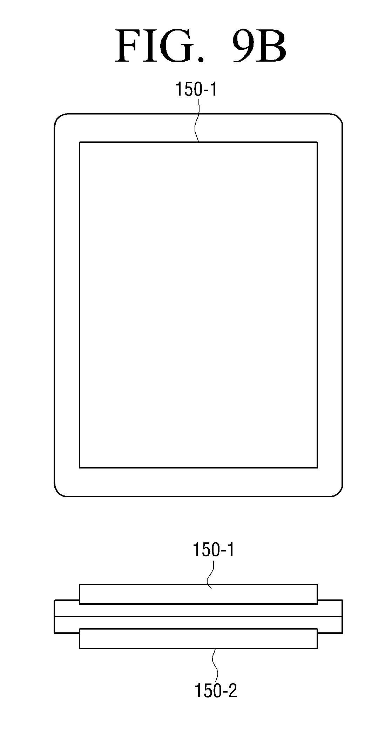

By manipulating a connector at the center of the dual-screen E-book device, the distance between EPD 150-1 and 150-2 may be reduced, as illustrated in FIG. 9a, or each side of EPD 150-1, 150-2 may be disposed on opposite sides of each other, as illustrated in FIG. 9B.

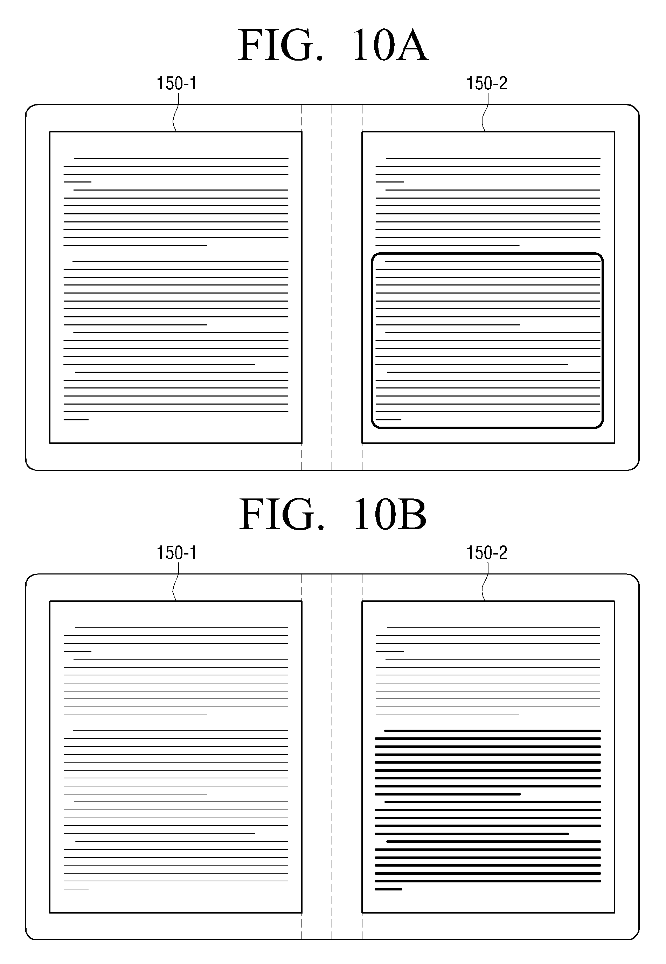

The E-book device provides a function of highlighting part of the E-book that a user selects. That is, as illustrated in FIG. 10A, if a user selects an area that he or she wants to highlight, the E-book device changes the texts in the selected area to be bold texts and highlights the selected area, as illustrated in FIG. 10B.

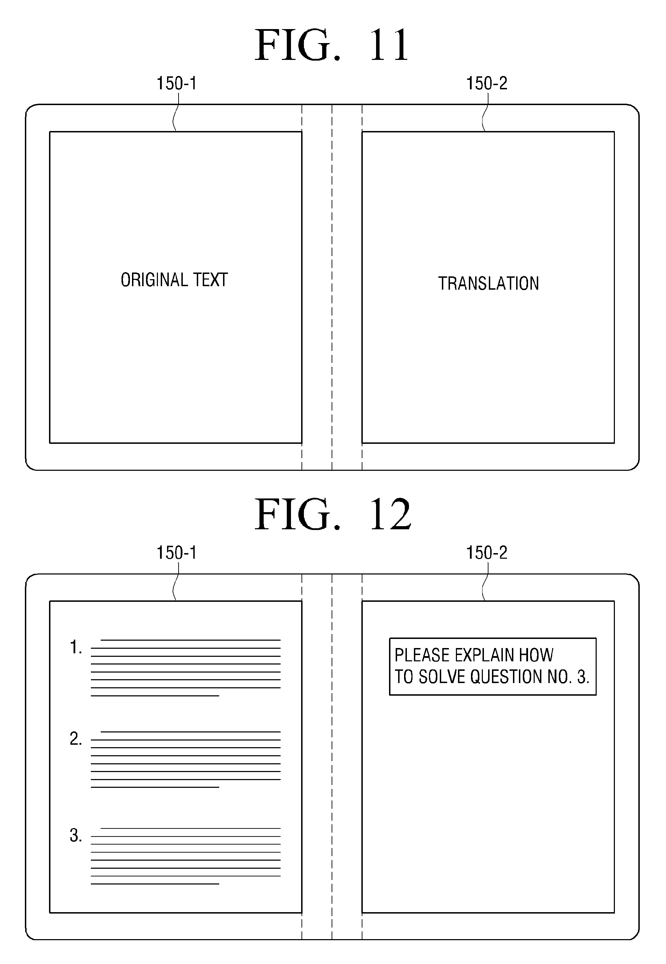

In addition, the dual-screen E-book device provides a translation function. The dual-screen E-book device may provide an original text on EPD-1 (150-1) and the translation on EPD-2 (150-2), as illustrated in FIG. 11.

The dual-screen E-book device has two displays, EPD 150-1, 150-2 and a touch panel in the EPD 150-1, 150-2, and thus a user may manipulate EPD 150-1, 150-2 to input commands. Accordingly, the E-book device may provide a note function on EPD-1 (150-1) and note sharing function on EPD-2 (150-2), as illustrated in FIG. 12.

The note sharing function enables a user to transmit what he or she writes in to other E-book devices and to receive what is input through the sharing note of other E-book devices, and display the shared data on the sharing note. With the note sharing function, the user may exchange opinions, questions, and answers with other users.

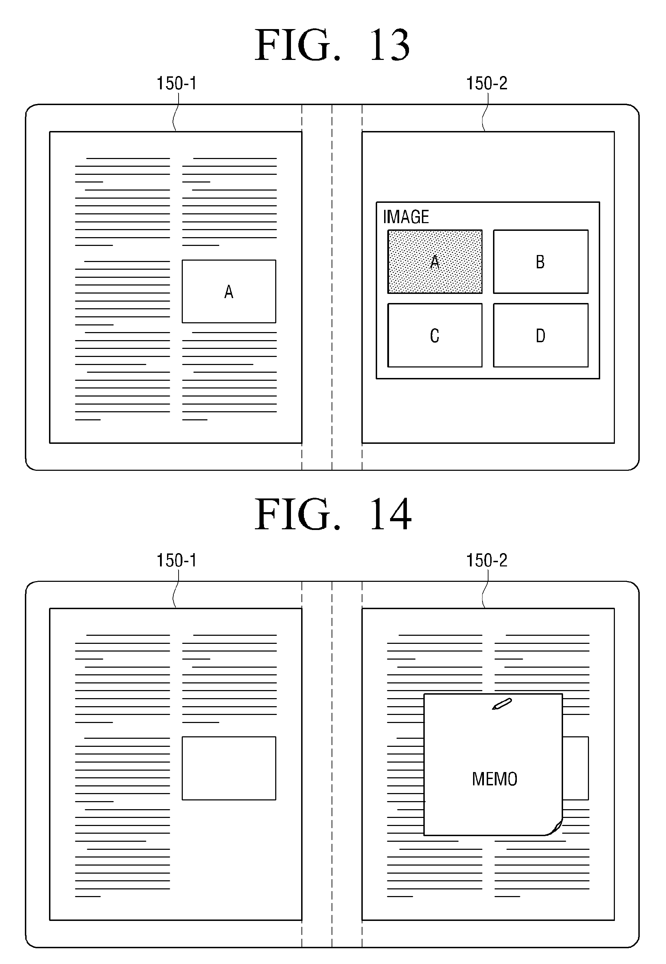

The E-book device may have a function of inserting an image into a note provided on EPD-1 (150-1). As illustrated in FIG. 13, a selected image, which may be selected from the clip board on EPD-2 (150-2), is inserted into a note provided on EPD-1 (150-1). Here, the E-book device links the selected image to the currently displayed note.

In addition, the E-book device provides the function of inserting a memo. As illustrated in FIG. 14, it is possible to insert a memo into a note provided on EPD 150-1, 150-2. Here, the E-book device links the memo to the currently displayed note. The memo may be inserted not only into a note, but also into an E-book.

In addition to inserting a memo, as illustrated in FIG. 14, it is possible to overlap a memo that a user manually writes on an E-book or a note.

A dual-screen E-book device may provide an E-book and a note to a user, and thus the E-book device may be used for educational purposes. For instance, a test paper may be provided on EPD-1 (150-1) and a note may be provided on EPD-2 (150-2).

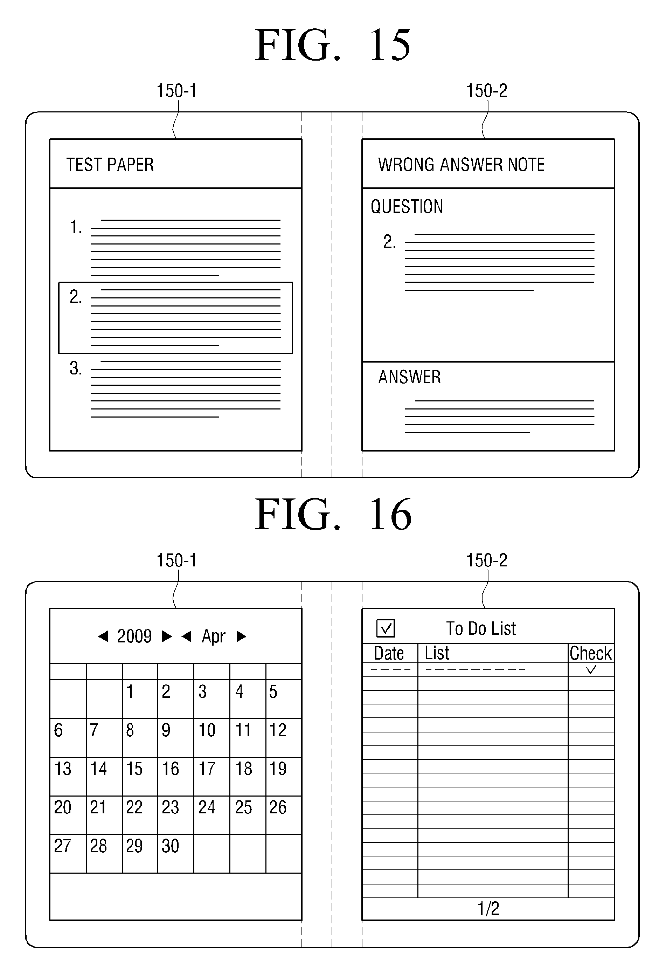

The note provided on EPD-2 (150-2) may be embodied as a wrong answer note. In this case, it is possible to copy wrong answers in the test note provided on EPD-1 (150-1) to the wrong answer note provided on EPD-2 (150-2), as illustrated in FIG. 15.

The E-book device provides a scheduler for managing schedule. FIG. 16 illustrates a scheduler provided by the E-book device. In the scheduler, a calendar is provided on EPD-1 (150-1) and a to-do list is provided on EPD-2 (150-2).

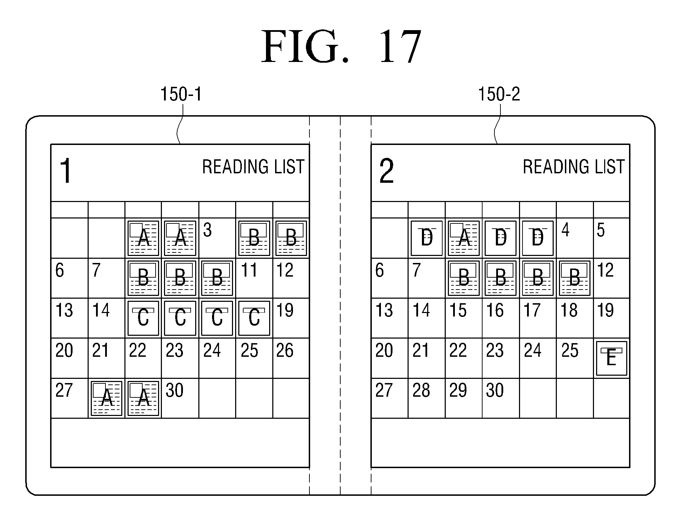

The E-book device provides information on reading history to a user. FIG. 17 illustrates a screen of reading history displayed in a calendar. The reading history refers to information on books that a user read previously and timing at which the user read the books. Through the screen of reading history in FIG. 17, one can see what electronic books the user has read and on which date the books were read.

By using the reading history, information on reading pattern of a user may be provided. For instance, statistics on reading speed, proportion of electronic book for each genre, and proportion of electronic book for each author may be provided.

The period and contents of the statistics to be extracted from the reading history may be selected by the user.

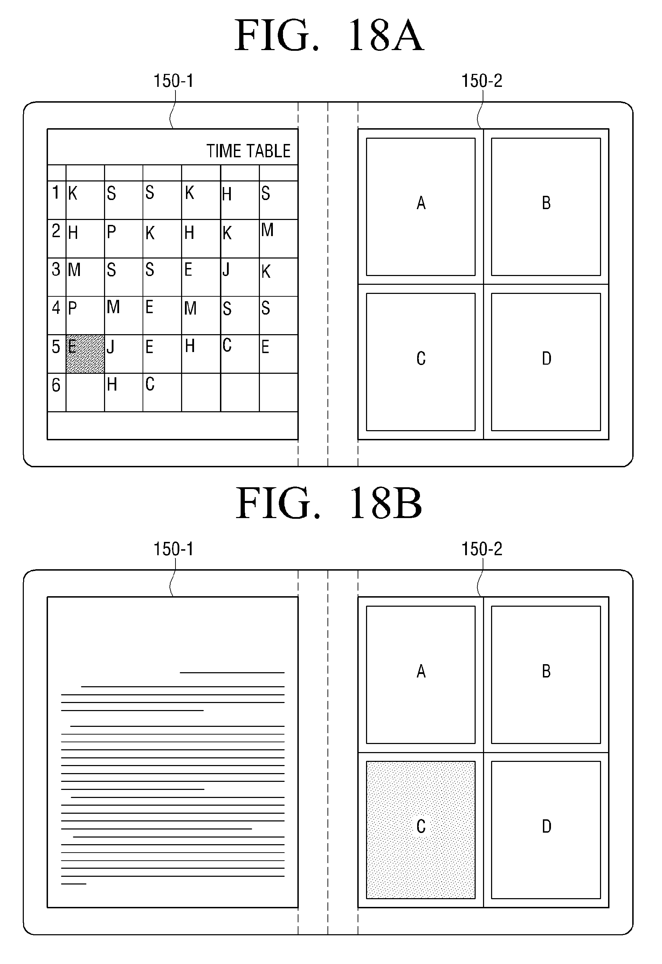

In addition, the E-book device may provide a class time table. FIG. 18A illustrates an example of class time table provided by the E-book device.

In FIG. 18A, the class time table is displayed on EPD-1 (150-1) and "English" text books which is selected from the class time table is displayed on EPD-2 (150-2). If one of the text books on EPD-2 (150-2) is selected, the contents of the selected text book are displayed on EPD-1 (150-1), as illustrated in FIG. 18B.

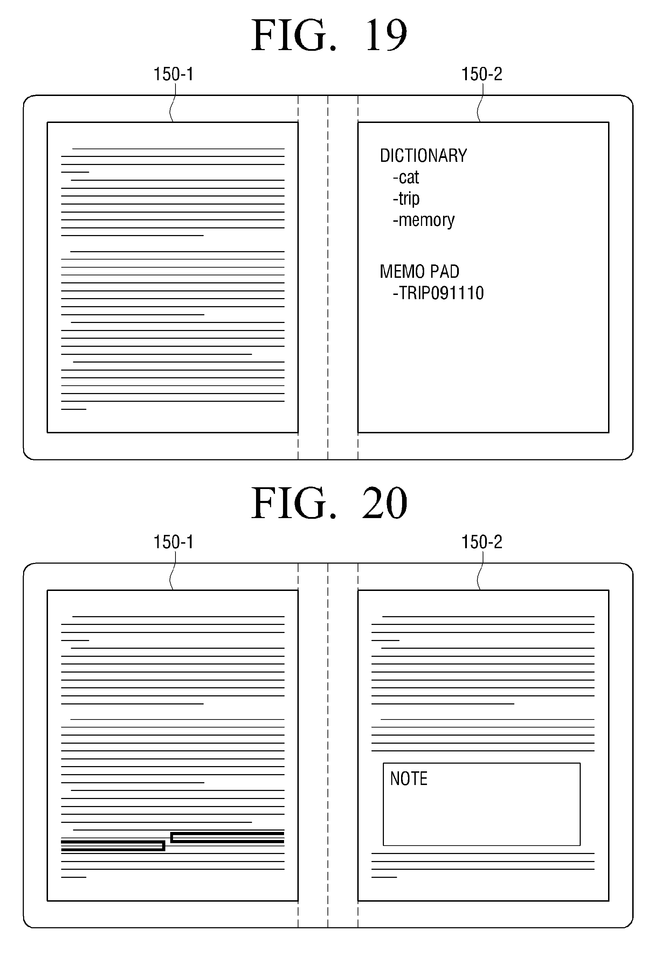

Multi-tasking history provides information on jobs performed previously on a currently displayed E-book page. In FIG. 19, the multi-tasking history of the E-book page currently being displayed on EPD-1 (150-1) is displayed on EPD-2 (150-2).

FIG. 19 illustrates a multi-tasking history that includes "cat", "trip", and "memory," which are dictionary search results, and "trip 091110," which is memo result.

The E-book device provides the function of making notes on specific terms of the E-book. FIG. 20 illustrates a note on EPD-2 (150-2) in which a user can make a note regarding the part of highlighted terms in the E-book on EPD-1 (150-1).

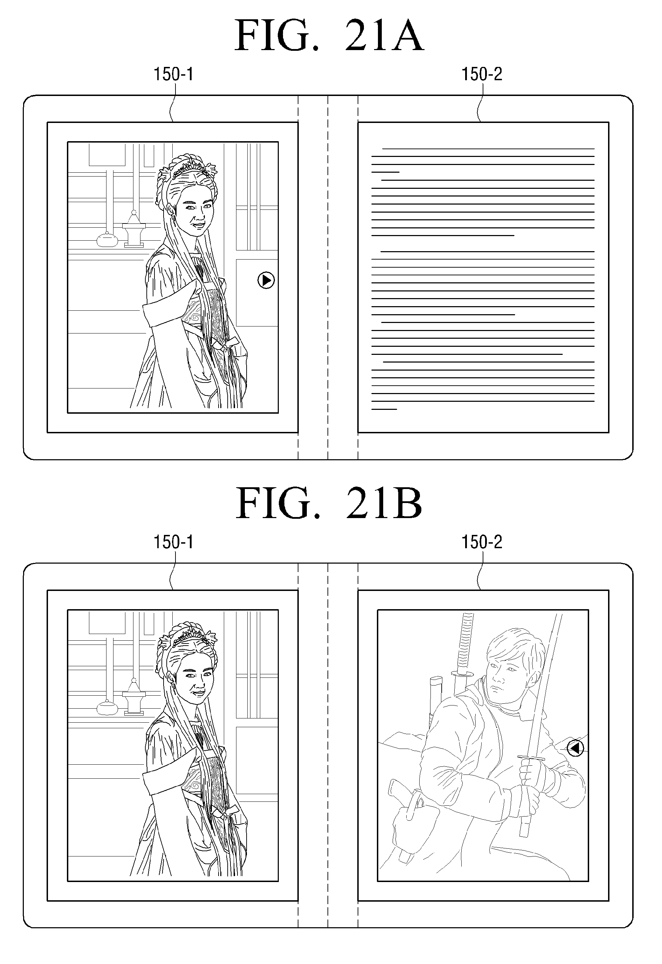

In FIG. 21A, in which an image is displayed on EPD-1 (150-1), and an E-book is displayed on EPD-2 (150-2), if the user selects "► " in the image on EPD-1 (150-1), the image viewer is extended to EPD-2 (150-2), as illustrated in FIG. 21B.

On the other hand, in FIG. 21B, in which images are displayed on both of EPD-1 (150-1) and EPD-2 (150-2), if the user selects "► " in the image on EPD-2 (150-2), the image viewer on EPD-2 (150-2) disappears and the E-book appears. That is, images on both of EPD-1 (150-1) and EPD-2 (150-2) revert to the images in FIG. 21A.

Although the dual-screen E-book device has two displays, EPD 150-1, 150-2, it is desirable to have one focus. To do so, only one of EPD 150-1 and EPD 150-2 should have focus. Accordingly, the means to select one of EPD 150-1 and EPD 150-2 to have focus should be provided.

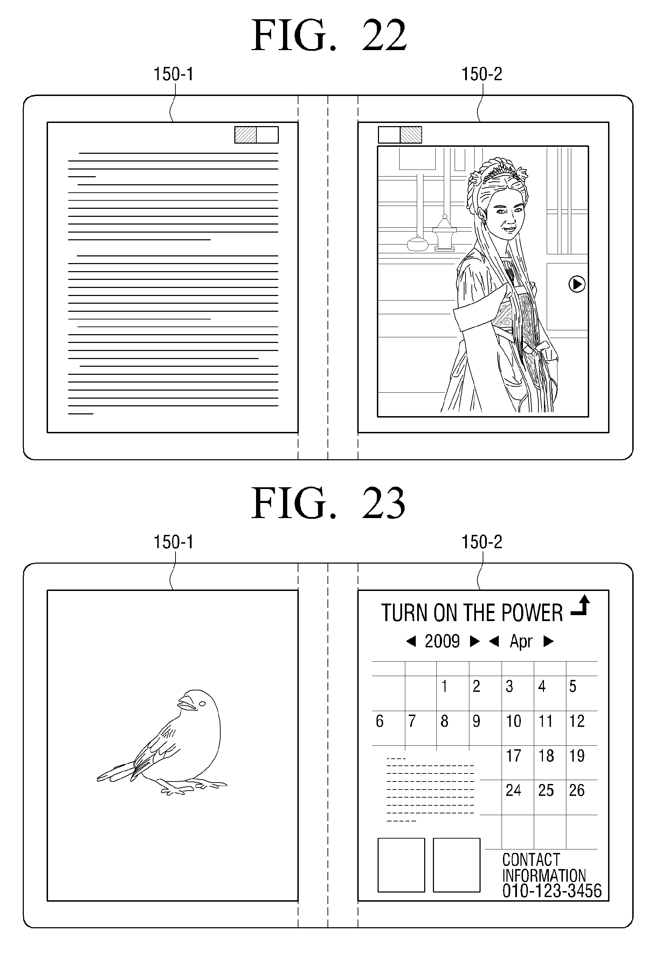

FIG. 22 illustrates the dual-screen E-book device with icons on the upper part of EPD 150-1, 150-2 for issuing a command to move focus. If the icon on the upper part of EPD-1 (150-1) is selected, focus is moved to EPD-1 (150-1), and if the icon on the upper part of EPD-2 (150-2) is selected, focus is moved to EPD-2 (150-2).

FIG. 23 illustrates a stand-by screen that is provided on EPD 150-1, 150-2, when the E-book device is turned off. The bird illustrated as the stand-by screen in FIG. 23 is merely an example, and the user may change the stand-by screen to display any image.

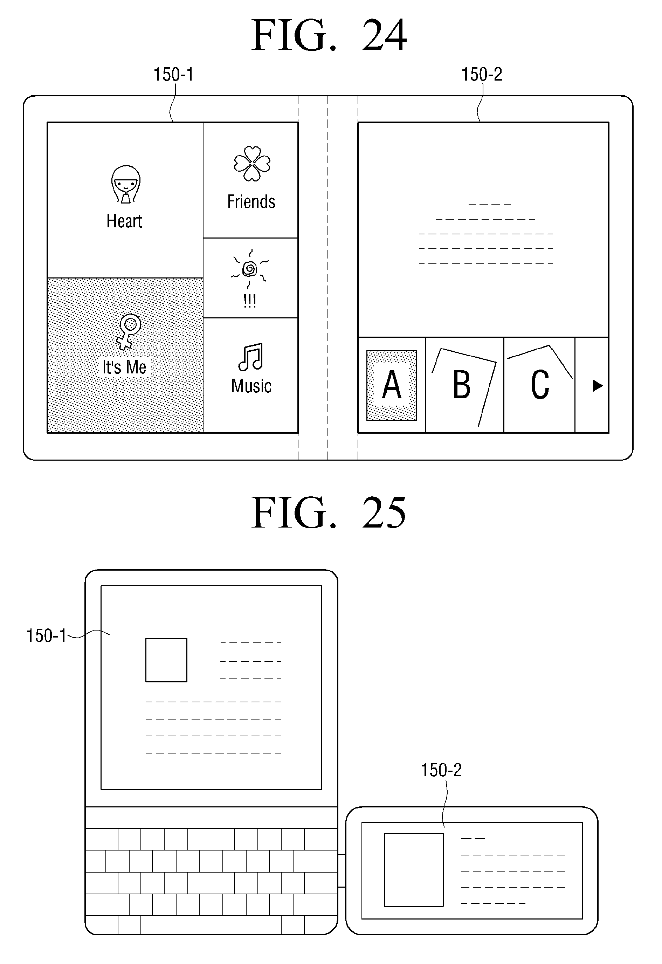

FIG. 24 illustrates the E-book device in which the aforementioned drawer is displayed on EPD-1 (150-1). In FIG. 24, the drawer comprises "Heart", "It's me", "Friends", "!!!", and "Music".

The contents in "It's me," from among other drawers on EPD-1 (150-1), are displayed on the lower part of EPD-2 (150-2). Additionally, the contents selected by the user from among the contents displayed on the lower part of EPD-2 (150-2) are magnified and displayed on the upper part of EPD-2 (150-2).

FIG. 25 illustrates the dual-screen E-book device with two asymmetric displays, EPD 150-1, 150-2. As illustrated in FIG. 25, EPD 150-1 and EPD 150-2 in the duel-screen E-book device may not have the same shape.

When EPD 150-1 and EPD 150-2 of the duel-screen E-book device are asymmetric, as illustrated in FIG. 25, EPD-2 (150-2) may be embodied to be folded over by a connection means, so as to be put upon the keyboard displayed on the lower part of EPD-1 (150-1).

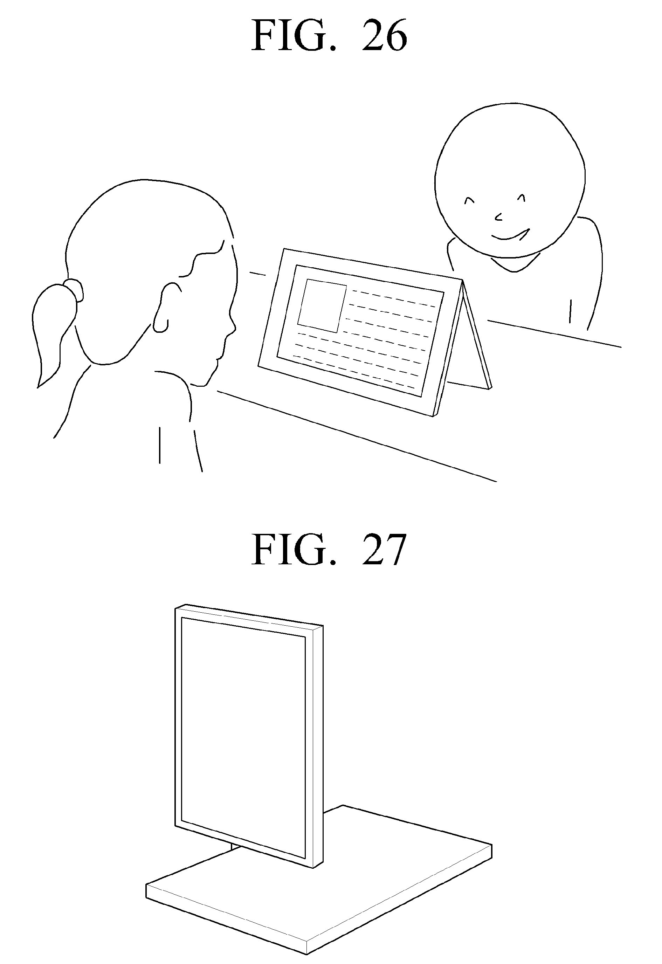

If the connection means between EPD 150-1 and 150-2 of the duel-screen E-book device is embodied to be flexible, EPD 150-1 and EPD 150-2 may be positioned on opposite sides, as illustrated in FIG. 26, so that users on opposite sides may view each EPD.

Additionally, the connection means may be configured so that EPD 150-1 and EPD 150-2 of the duel-screen E-book device are folded and rotatable, as illustrated in FIG. 27.

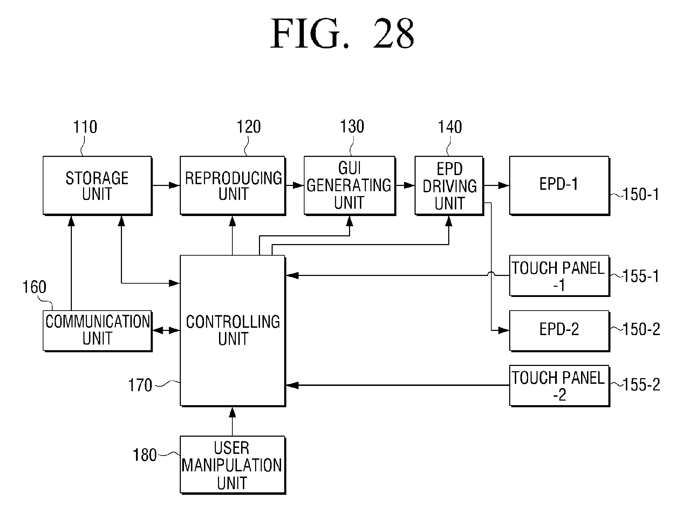

FIG. 28 is a block diagram of a dual-screen E-book device. As illustrated in FIG. 28, the E-book device comprises a storage unit 110, a reproducing unit 120, a GUI generating unit 130, an EPD driving unit 140, EPD 150-1, 150-2, a touch panel 155-1, 155-2, a communication unit 160, a controlling unit 170, and a user manipulation unit 180.

The storage unit 110 provides a storage space for storing contents, and may include not only a built-in storage element but also a detachable storage element. The storage unit 110 may be, for example, a read-only memory (ROM), random access memory (RAM), flash memory, detachable USB memory, or the like. The contents stored in the storage unit 110 include not only an electronic book, but also a still image and a moving image.

The reproducing unit 120 reproduces and outputs contents stored in the storage unit 110. If contents are stored in the storage unit 110 in compressed format, the reproducing unit 120 decompresses the compressed contents.

The GUI generating unit 130 generates a GUI and adds the generated GUI to the contents output by the reproducing unit 120. The GUI generating unit 130 generates a GUI according to the control by the controlling unit 170, which will be explained below.

The EPD driving unit 140 displays the contents with the GUI applied from the GUI generating unit 130 on EPD 150-1, 150-2 distinctively.

As described above, the touch panel 155-1, 155-2 are formed on the EPD 150-1, 150-2, and sense a user's manipulation input through EPD 150-1, 150-2. The user's manipulation sensed by the touch panel 155-1, 155-2 is transmitted to the controlling unit 170.

The communication unit 160 is communicably connected to an external apparatus or an external network. The user manipulation unit 180 is a physical means for receiving a user's command, and includes manipulation buttons formed on the case of the E-book device.

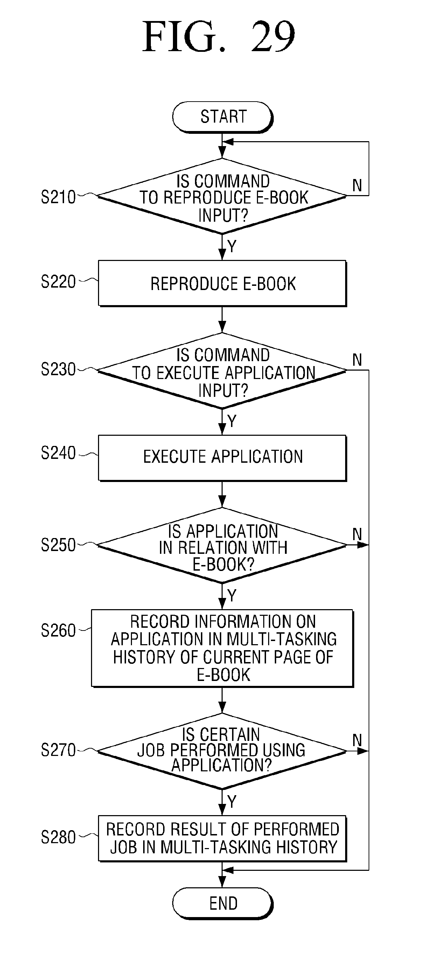

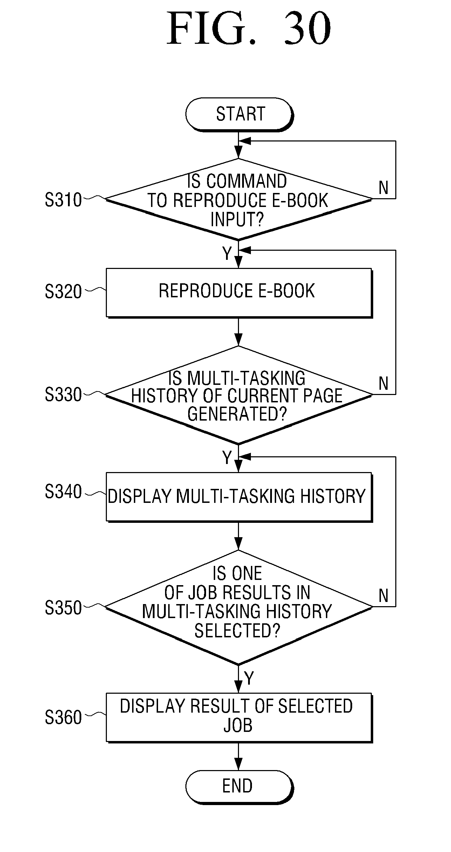

The controlling unit 170 controls operation of the E-book device according to a user's command input through the touch panel 155-1, 155-2 and the user manipulation unit 180. The controlling unit 170 may be, for example, a central processing unit (CPU). In particular, the controlling unit 170 generates and provides multi-tasking history to a user, which will be explained below in detail with reference to FIG. 29 and FIG. 30.

FIG. 29 is a flow chart provided to explain the process of generating multi-tasking history.

As illustrated in FIG. 29, if a user inputs a command to reproduce the E-book (S210-Y), the controlling unit 170 controls the reproducing unit 120 and the EPD driving unit 140 to reproduce the E-book and display the electronic book on EPD 150-1, 150-2. Accordingly, the E-book is reproduced and the user may read the displayed electronic book.

If a user inputs a command to execute an application during the step of S220 (S230-Y), the controlling unit 170 executes the application (S240) and determines whether the application is in relation to the E-book (S250).

For instance, applications for accessing an electronic dictionary or memo pad may be deemed to be in relation with the E-book. A game application, however, may not be deemed to be in relation with the electronic dictionary or memo pad.

If it is determined that the application is in relation with the E-book (S250-Y) in the step of S250, the controlling unit 170 records information on the application in multi-tasking history of the current page of the E-book that is being reproduced (S260).

If there is no multi-tasking history of the current page of the E-book that is being reproduced, the controlling unit 170 generates multi-tasking history in the step of S260 and records information on the application.

Subsequently, if a user performs a certain job using the executed application (S270-Y), the controlling unit 170 records the job result in multi-tasking history (S280). The multi-tasking history is stored in the storage unit 110.

FIG. 30 is a flow chart provided to explain the process of providing multi-tasking history. As illustrated in FIG. 30, if a user inputs a command to reproduce the E-book (S310-Y), the controlling unit 170 controls the reproducing unit 120 and the EPD driving unit 140 to reproduce the E-book and display the electronic book on EPD 150-1, 150-2 (S320).

The controlling unit 170 determines whether multi-tasking history of the current page of the E-book is generated (S330).

If it is determined that there is multi-tasking history of the current page in the step of S330 (S330-Y), the controlling unit 170 reads out the multi-tasking history from the storage unit 110 and controls the GUI generating unit 130 to display the multi-tasking history on EPD-2 (150-2) in a GUI (S340). Accordingly, the user may view the multi-tasking history.

As discussed above, FIG. 19 illustrates an example of multi-tasking history on EPD-2 (150-2) of the E-book device. The multi-tasking history in FIG. 19 includes "cat", "trip", and "memory", which are the result of using electronic dictionary application, and "trip 091110," which is the result of writing a memo.

The user may select one of the job results in multi-tasking history. If one of the job results in multi-tasking history is selected by a user (S350-Y), the controlling unit 170 provides the user with the selected job result through EPD-2 (150-2) (S360).

For instance, if the user selects "memory" from multi-tasking history, the controlling unit 170 executes an electronic dictionary application, automatically inputs a command to search "memory" using the application, and display the result of searching "memory" in the dictionary on EPD-2 (150-2).

Alternatively, if the user selects "trip091110" from multi-tasking history, the controlling unit 170 executes a memo pad application, opens "trip 091110" using the application, and displays the memo in "trip 091110" on EPD-2 (150-2).

The multi-tasking history may be edited according to a user's command. For instance, the user may edit the multi-tasking history to delete some of the job results or change the order of the job results.

In the above exemplary embodiment, an E-book has been reproduced and the E-book may be regarded as contents. The technical features discussed above may be applied to contents other than an E-book.

Additionally, in the above description, an E-book device has been taken as an example. However, the technical features discussed above may be applied not only to an E-book device, but also to other apparatuses for reproducing contents.

In the above exemplary embodiment, the E-book device has been embodied using two EPDs, but this is only an example. An E-book device may be embodied using one EPD and one LCD (or a touch screen), or using two LCDs (or two touch screens).

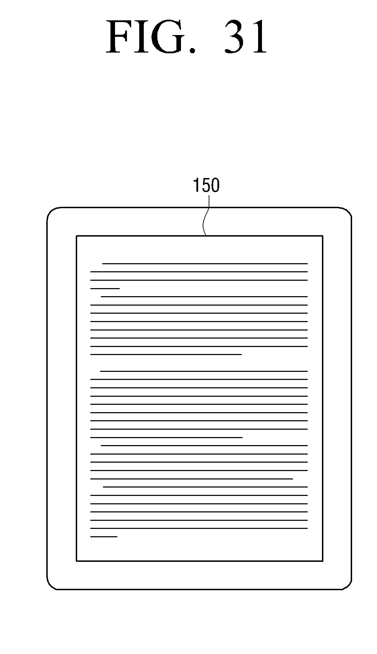

In addition, an E-book device may be embodied to have only one display, as illustrated in FIG. 31. The functions which can be performed using only one display from among the aforementioned functions of an E-book device may be applicable to an E-book device having only one display, as illustrated in FIG. 30.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic book (E-book) device comprising:
a storage unit that stores contents;
a reproducing unit that reproduces the contents stored in the storage unit;
a graphical user interface (GUI) generating unit that generates a GUI, the generated GUI including the contents reproduced by the reproducing unit;
a display that displays the GUI generated by the GUI generating unit; and
a controlling unit that controls the GUI generating unit to include a multi-tasking history regarding contents reproduced by the reproducing unit in the GUI and controls the display to display the GUI including the multi-tasking history.

2. The E-book device according to claim 1, wherein the contents are an E-book, and wherein the controlling unit controls the GUI generating unit to generate multi-tasking history of a current page of an E-book reproduced by the reproducing unit in the GUI.

3. The E-book device according to claim 1 or claim 2, wherein the controlling unit, if an executed application is determined to be related to the contents, records information on the executed application in the multi-tasking history.

4. The E-book device according to claim 3, wherein the contents are an E-book , wherein an application related to the E-book comprises at least one of an electronic dictionary application and a memo pad application.

5. The E-book device according to one of claim 1 to claim 4, wherein the controlling unit records a result of a job performed using an executed application in the multi-tasking history.

6. The E-book device according to one of claim 1 to claim 5, wherein the controlling unit, if a job result in the multi-tasking history is selected, provides selected job result on the display.

7. The E-book device according to one of claim 1 to claim 6, wherein the controlling unit deletes a job result selected from multi-tasking history from the multi-tasking history.

8. A method for providing a multi-tasking history, the method comprising:
reproducing contents on a display of an electronic book (E-book) device; and
providing a multi-tasking history regarding reproduced contents on the display as a graphical user interface (GUI).

9. The method according to claim 8, wherein the contents are an electronic book, and
wherein the providing provides the multi-tasking history regarding a current page of the electronic book displayed on the display as the GUI.

10. The method according to claim 8 or claim 9, further comprising:
recording information on an executed application in the multi-tasking history if it is determined that the executed application is related to the contents.

11. The method according to claim 10, wherein the contents are an electronic book , and
wherein an application related to the E-book comprises at least one of an electronic dictionary application and a memo pad application.

12. The method according to one of claim 8 to claim 11, further comprising:
recording result of a job performed using an executed application in the multi-tasking history.

13. The method according to one of claim 8 to claim 12, further comprising:
providing, if a job result in multi-tasking history is selected, the selected job result on the display.

14. The method according to one of claim 8 to claim 13, further comprising:
deleting a job result, selected from the multi-tasking history, from the multi-tasking history.
